# EUROPÄISCHE PATENTSCHRIFT

(11) **EP 1 543 299 B1**
(45) Veröffentlichungstag und Bekanntmachung des Hinweises auf die Patenterteilung: **16.03.2016**
(21) Anmeldenummer: 03762388.1
(22) Anmeldetag: 06.06.2003
(51) Int. Cl.: G01G 19/04

(54) **MESSEINRICHTUNG ZUM ERFASSEN VON RADLASTEN**
MEASURING DEVICE FOR DETECTING WHEEL LOADS
DISPOSITIF DE MESURE POUR SAISIR DES CHARGES DE ROUES

(30) Priorität: 02.07.2002 DE 20210173 U; 14.09.2002 DE 20214267 U
(43) Veröffentlichungstag der Anmeldung: 22.06.2005
(73) Patentinhaber: Pieper, Siegfried, 55234 Eppelsheim (DE)
(72) Erfinder: WINKLER, Reinhard, 14482 Potsdam (DE); BASTIAN, Rainer, 14822 Borkheide (DE)
(74) Vertreter: Thews, Gustav
(86) Internationale Anmeldenummer: PCT/DE2003/001884
(87) Internationale Veröffentlichungsnummer: WO 2004/005864

(56) Entgegenhaltungen:
- EP-A- 1 288 638
- WO-A-01/18505
- DE-U- 20 210 173
- DE-U- 20 214 267
- GB-A- 2 315 559

## Beschreibung

Die Erfindung betrifft eine Messeinrichtung zum Messen von statischen und/oder dynamischen Radlasten bzw. Radaufstandskräften, insbesondere von Schienenfahrzeugen.

Es ist bekannt, Radlasten von Fahrzeugen und Radaufstandskräfte von Schienenfahrzeugen zu erfassen. Diese Prüfarbeitsgänge sind nach genau festgelegten Kriterien in der Fahrzeuginstandhaltung und -herstellung durchzuführen und in der Lebenslaufakte, beispielsweise eines jeden Schienenfahrzeuges, zu dokumentieren. Durch diese Prüfungen wird die Belastbarkeit von Fahrzeugen festgestellt und es wird der Nachweis zulässiger Rad- und Achslastdifferenzen eines Schienenfahrzeuges zur Vermeidung von Entgleisungen und der Verringerung von Schleuderneigungen erbracht.

Weiterhin ist bekannt, mit derartigen Prüfeinrichtungen das Gesamt- bzw. das Betriebsgewicht eines Schienenfahrzeuges zu ermitteln, um Überladungen, die zu einer Überbeanspruchung des Schienennetzes führen, zu vermeiden. Die bekannten Wäge- bzw. Messsysteme finden stationär und mobil Anwendung.

Aus der DE 32 10 410 A1 ist eine Vorrichtung und ein Verfahren zum Wiegen rollender Schienenfahrzeuge bekannt. Ein Wiegeabschnitt gemäß dieser Schrift besteht aus zwei nicht unterstützten Abschnitten von konventionellen Schienen, in dem zwei nebeneinander liegende Schwellen entfernt sind. An der so entstandenen Schienenbrücke werden an deren Unterseite vier Dehnungsmesser, bestehend aus zwei Paaren von äußeren und inneren Messgeräten, in den jeweiligen Brückenhälften montiert. Die Ausgangssignale der vier Dehnungsmesser werden summiert, indem die Ausgangssignale der inneren Messgeräte addiert und die der äußeren Messgeräte subtrahiert werden. Diese Summe stellt einen konstanten Wert dar, der repräsentativ ist für die vom Gleis aufgenommene Last, während sich die Achslast zwischen den beiden inneren Messgeräten bewegt. Ein von einem Rad jeder Achse betätigter Begrenzungsschalter aktiviert einen Computer. Der Computer zählt eine Mehrzahl von Summenmessungen zusammen, während sich eine Achse zwischen den beiden inneren Messgeräten bewegt, bildet Durchschnittswerte der Summenmessungen, um einen Durchschnittslastwert für jede Wagenachse zu produzieren und wandelt die zusammengezählten Durchschnittswerte in das Gewicht des Wagens um.

Aus DE 198 34 030 A1 ist eine Messschwelle für Gleisfahrzeuge, welche aus Biegestäben besteht, die parralel zu den Gleisen angeordnet sind und über Montageplatten die Auflagekraft der Schienen ermittelt, bekannt. Die Kraft der Schiene wird durch zwei Biegestäbe links und rechts der Schiene eines Schienenpaares ermittelt. Die Biegestäbe sind durch Quertraversen miteinander verbunden, wobei die Quertraversen sich auf den Schienen oder auf einer Platte für die Schienenbefestigung abstützen bzw. verbunden sind.

In der DE 100 31 092 A1 wird eine Wägevorrichtung für Schienenfahrzeuge beschrieben, die auf herkömmlichen standardisierten Betonschwellen befestigt ist. Die Betonschwellen tragen eine Kraftmessvorrichtung bzw. Wägezellen, auf denen wiederum die Schienen fest verbunden lagern. Die mit der Kraftmessvorrichtung bzw. den Wägezellen versehenen Betonschwellen sind in ein durch Schotterverklebung stabilisiertes Schotterbett eingeklebt. Mit der beschriebenen Wägevorrichtung ist sowohl das statische als auch das dynamische Gewicht von Schienenfahrzeugen oder -teilen ermittelbar.

Die beschriebenen Wäge- und Messvorrichtungen sind zwar demontierbar und insofern auch unter Umständen mobil einsetzbar, sind aber von ihrer Konstruktion und der Art und Weise ihrer Verbindung mit dem Schienenkörper für den stationären Betrieb gedacht und finden auch so ihre Anwendung.

In der WO 01/18505 A1 wird eine mobile Radlastmessvorrichtung beschrieben, bei der eine oder mehrere Wägezellen in einem kompakten, länglich trogförmigen, im Schnitt etwa u-förmigen und starren Metallkörper verschraubt sind. Jeweils zwei derartige Metallkörper werden mittels zweier Spannstreben in einem durch benachbarte Schwellen gebildeten Gleisfach an die Innenseiten der beiden Schienenstege gepresst, wobei die Spannstreben über Rohrstutzen an den Enden der Metallkörper starr angreifen. Durch fest verschraubte Rampen, die jeweils vor und nach der eigentlichen Messvorrichtung angeordnet sind, wird jeweils ein heranrollendes und zu messendes Rad von der Fahrfläche der Schiene abgehoben und ruht während der Messung mit dem Spurkranz auf der Messvorrichtung. Die Radlast bzw. die Radaufstandskräfte werden über den Spurkranz auf die Messvorrichtung mit innenliegendem Dehnungsmessstreifen übertragen.

Im Gegensatz zu stationären Radlastmessvorrichtungen, deren Aufbau meist mit erheblichen Investitionskosten verbunden ist, stellen mobile Einrichtungen eine wesentlich preisgünstigere Lösung dar. Sie lassen sich nach der Durchführung der Messungen wieder entfernen, so dass ein durch keinerlei Einbauten behinderter Fahrbetrieb gewährleistet ist. Für mobile Einrichtungen spricht auch, dass sie an beliebigen Gleisabschnitten mit einer bestimmten Schienenüberhöhung bzw. Gleiskrümmung eingesetzt werden können, sofern die Notwendigkeit einer Messung der Radlasten unter derartigen Bedingungen gefordert ist.

Als nachteilig hat sich bei der Radlastmessvorrichtung nach der WO 01/18505 A1 erwiesen, dass sich die Radlastmessvorrichtung während der Montage nicht mehr der aktuellen Einbausituation, die auf Grund von Fertigungstoleranzen im Gleisbau und im Herstellungsprozess der Schiene auftreten, anpassen kann. Dadurch kommt es zu Kipp- und Anhebeerscheinungen der Wägebrücken unter Last, was zu Messwertverfälschungen führt. Will man das durch Anwendung erhöhter Spannkraft vermeiden, treten Deformationen des Metallkörpers ein. Auch ist es von Nachteil, dass sich die Radlastmessvorrichtung in Folge ihrer Gestalt nur zwischen zwei benachbarten Gleisklammern anbringen lässt. Das ist aber in dem Fall hinderlich, wenn bei der Messung, beispielsweise an einem mehrachsigen Drehgestell, eine der Achsen über einer Schwelle mit Gleisklammern steht.

Der Erfindung liegt die Aufgabe zugrunde, die im Stand der Technik aufgezeigten Nachteile zu überwinden, eine mobile Vorrichtung vorzuschlagen, um eine schnellere und einfachere Montage und Demontage unter gleichzeitiger Verringerung des Gewichts der Messeinrichtung zu erreichen. Mit der vorzuschlagenden mobilen Vorrichtung sind Verkantungen und Verspannungen der Wäge- bzw. Messzelle und damit einhergehende Messwertfehler, insbesondere in problematischen Einbausituationen, auszuschließen. Die vorzuschlagende Vorrichtung ist in allen Schienenprofilen und Spurweiten und bei geringfügig gekrümmten Gleisabschnitten und bei einer Schräglage des Gleisprofils einsetzbar, wobei die Messeinrichtung so gestaltet ist, dass sie auch dauerhaft im stationären Einbau einsetzbar ist.

Erfindungsgemäß wird die Aufgabe durch die in dem Anspruch 1 genannten Merkmale gelöst. Vorteilhafte Ausgestaltungen sind in den Unteransprüchen angegeben. Die erfindungsgemäße Messeinrichtung zum Erfassen von Radlasten, insbesondere von Schienenfahrzeugen, ist mit mindestens zwei Lastaufnahmeblöcken und innenliegenden Messabschnitten sowie mit Elementen zum Halten und Verspannen der Lastaufnahmeblöcke in einer Gleisanlage ausgestattet, wobei in einem Lastaufnahmeblock mindestens zwei Stützmittel angeordnet sind. Auf den Stützmitteln sind jeweils die Endstücke von einem stabförmigen Messabschnitt gelagert, wobei die Stützmittel streifen- und/oder punktförmige Auflagen zur Arretierung in der Gleisanlage aufweisen und mindestens zwei kraftumleitende Elemente zwischen einer einarmigen Verspannvorrichtung und der Gleisanlage angeordnet sind.

Die Lastaufnahmeblöcke sind jeweils als separate Messblöcke ausgebildet. In einem Messblock ist als ein erstes kraftumleitendes Element eine Brücke von unterschiedlicher Gestaltung angeordnet, die in x-Richtung seitlich parallel zu einem Messabschnitt, vorzugsweise einer balken- bzw. stabförmigen Wägebrücke, verläuft und so angeordnet ist, dass die Brücke Stützmittel verbindet, welche an Schienen anliegen. Alternativ besteht die Brücke aus einem in x-Richtung verlaufenden Schenkel, aus zwei äußeren Schenkeln mit je einem abgewinkelten Flansch, wobei die Flansche wiederum mit den Stützmitteln kraftübertragend verbunden sind. In einer weiteren Ausgestaltungsform besteht die Brücke aus einer Platte. Als ein weiteres kraftumleitendes Element ist mindestens eine Versteifungsplatte mit der Brücke korrespondierend angeordnet.

Die am Messblock befindlichen Stützmittel sind als Auflagefüße ausgebildet. Sie sind vorzugsweise von klauenförmiger Gestalt mit einer inneren Wange und einer äußeren Wange, wobei die innere Wange des Auflagefußes mit der Brücke kraftschlüssig verbunden ist und die äußere Wange des Auflagefußes im montierten Zustand über Adapter an der Schiene anliegt. Zwischen der inneren Wange und der äußeren Wange der Stützmittel sind Endstücke der Wägebrücke um Führungszapfen bewegbar in schwimmender Ausführung angeordnet, so dass die Wägebrücke frei, nur auf ihren Endstücken lagernd, zwischen den Stützmitteln angeordnet ist. Oberhalb dieser Endstücke liegen Verschlussstücke auf. Der klauenförmige Auflagefuß wirkt in Verbindung mit dem Verschlussstück als ein weiteres kraftumleitendes Element.

Als kraftumleitende Elemente werden Mittel bezeichnet, mit denen, die von einer einarmigen Verspannvorrichtung ausgehenden, auf die Lastaufnahmeblöcke wirkenden Kräfte, in ihrer Wirkungslinie zerlegt werden. Die Kräftezerlegung ist einerseits erforderlich, um die von der einarmigen Verspannvorrichtung ausgehenden Kräfte ohne Formänderung von Bauelementen gleichmäßig auf die Stützmittel, in denen die Endstücke von einem stabförmigen Messabschnitt lagern, zu verteilen und andererseits um die Endstücke von dem stabförmigen Messabschnitt schwimmend, das heißt ohne Krafteinwirkung von der Verspannvorrichtung, zu arretieren.

Bei der Wägebrücke handelt es sich um ein wägetechnisches Element, welches bei Verformung in Folge einer äußeren Krafteinwirkung seine Ausgangsspannung proportional zur eingebrachten Kraft verändert. Die Messung von statischen und/oder dynamischen Radlasten bzw. Radaufstandskräften, insbesondere von Schienenfahrzeugen, erfolgt gemäß der Erfindung auf einem stabförmigen bzw. balkenförmigen Lastenaufnehmer also freihängend. Während des Wäge- bzw. Messvorganges verbiegt sich die stabförmige bzw. balkenförmige Wägebrücke über ein Biegelager in z-Richtung nach unten. Die Messgrößen oder der Verformungsweg aus einer Radaufstandskraftmessung werden über Dehnungsmessstreifen, Drucksensoren, Distanzsensoren, optischen Sensoren oder andere Messmittel erfasst und ausgewertet. Die linke und rechte Radaufstandskraft wird addiert und ergibt die Achsaufstandskraft.

Rampenplatten, Auffahrflächen, Distanzplatten und Verbindungsbrücken ermöglichen das Auffahren auf und über die stabförmige bzw. balkenförmige Wägebrücke. An der Brücke sind mittig Kupplungselemente zur Aufnahme einer einarmigen Verspannvörrichtung vorgesehen.

Die Montage der Messeinrichtung und das Erfassen von Radlasten, insbesondere von Schienenfahrzeugen, erfolgt unter Verwendung von mindestens zwei Lastaufnahmeblöcken, von Elementen zum Halten und Verspannen der Lastaufnahmeblöcke in einer Gleisanlage, unter Verwendung von Stützmitteln und zwischen den Stützmitteln angeordnete Messabschnitten nach folgenden Schritten:
- Verbinden mindestens zweier Lastaufnahmeblöcke mittels Elementen zum Halten und Verspannen, wobei die Lastaufnahmeblöcke je eine an ihren Endstücken gelagerte Wägebrücke in Stützmitteln aufnehmen,
- Einsetzen und Verspannen mindestens zwei miteinander verbundener Lastaufnahmeblöcke in einer Gleisanlage, wobei die beim Verspannen auftretende Kraft von einer einarmigen Verspannvorrichtung auf deren Kugelzone in eine kugelzonenförmige Einstecköffnung, auf eine Brücke und über mindestens eine Versteifungsplatte, die mit der Brücke korrespondiert auf Flansche und über die Stützmittel in Verbindung mit eingelagerten Verschlussstücken auf die Schienen übertragen wird,
- Aufsetzen von Lasttragelementen und/oder Auf- und Abfahrtschrägen auf die Stützmittel und Messabschnitte, wobei die Lasttragelemente und/oder Auf- und Abfahrtschrägen aus Rampenplatten und/oder Auffahrflächen und/oder Verbindungsbrücken bestehen,
- Auffahren eines Fahrzeuges über die Rampenplatten auf die Auffahrfläche,
- Messen der Radlast mittels stabförmiger Wägebrücke, wobei diese eine Brücke bildend, frei hängend angeordnet und an ihren Endstücken in einem definierten Bereich von einem Führungszapfen arretiert, schwimmend gelagert ist, wobei die Wägebrücke sich während des Wäge- bzw. Messvorganges über ein Biegelager nach unten verbiegt und die Messgrößen oder der Verformungsweg über Dehnungsmessstreifen, Drucksensoren, Distanzsensoren, optische Sensoren und/oder andere Messmittel erfasst und ausgewertet werden.

Zum Messen mehrerer Achsen gleichzeitig, beispielsweise eines mehrachsigen Drehgestells, werden mehrere Messeinrichtungen hintereinander gekoppelt und in einem Gleisbett zu einer Mehrfachmesseinrichtung angeordnet. Zwischen den einzelnen Messeinrichtungen sind Verbindungsbrücken aufgelegt, die ein unproblematisches Überfahren der Achsen über die einzelnen Messeinrichtungen gewährleisten.

Die erfindungsgemäße Messeinrichtung kann unabhängig von den beschriebenen Ausführungsformen auch mit alternativen Abwandlungen zur Messung von Achslasten von anderen Fahrzeugen verwendet werden. So ist es erfindungsgemäß vorgesehen, die Messeinrichtung in einer definierten Spur zu installieren und an Stelle der lasttragenden Auffahrflächen für Schienenfahrzeuge, Auffahrflächen oder -mulden mit einer den allgemeinen Fahrzeugrädern angepassten Geometrie anzuordnen.

Durch die Gesamtkonstruktion der Messblöcke, insbesondere durch die kraftumleitenden Elemente mit ihrer erfindungsgemäßen kraftflussgerechten Gestaltung und den an der Schiene anliegenden Adaptern sowie der Kupplungskonstruktion, mit einem Aufnahmeelement am Messblock und einer Kugelzone mit einem Führungsstück an der einarmige Verspannvorrichtung wird ein internes Verkanten der Gesamtkonstruktion im Montage- und Demontageprozess und vor allem während des Messvorganges ausgeschlossen. Durch eine bombierte Ausführung der Kugelzone an den beiden Endstücken der einarmigen Verspannvorrichtung kann eine optimale Anpassung an die aktuelle Einbausituation gewährleistet werden, so dass Kipp- und Anhebeerscheinungen der gesamten Messeinrichtung unter Last ausgeschlossen sind.

Die Merkmale der Erfindung gehen außer aus den Ansprüchen auch aus der Beschreibung und der Zeichnung hervor, wobei die einzelnen Merkmale jeweils für sich allein oder zu mehreren in Form von Unterkombinationen schutzfähige Ausführungen darstellen, für die hier Schutz beansprucht wird.

Zwei Ausführungsbeispiele der Erfindung sind in der Zeichnung dargestellt und werden anhand einer Messeinrichtung für Schienenfahrzeuge im Folgenden näher erläutert. In der zugehörigen Zeichnung zeigen:
- Figur 1: Draufsicht mit Teilschnitten der Messeinrichtung im demontierten Zustand,
- Figur 2: Seitenansicht mit Teilschnitten der Messeinrichtung im montierten Zustand zwischen den Schienen,
- Figur 3: Draufsicht mit Teilschnitten auf einen Lastaufnahmeblock einer Messeinrichtung,
- Figur 4: vereinfachter Schnitt A - A nach Fig. 1 mit aufgesetztem Spurkranz,
- Figur 5: Ansicht B - B nach Fig. 3 eines Lastaufnahmeblockes der Messeinrichtung,
- Figur 6: Schnitt C - C nach Fig. 3,
- Figur 7: Schnitt durch eine Verspannhülse,
- Figur 8: Draufsicht auf eine kombinierte Messvorrichtung für drei Achsen im montierten Zustand zwischen den Schienen,
- Figur 9: Schnitt D - D nach Fig. 8.
- Figur 10: Draufsicht mit Teilschnitten der Messeinrichtung im demontierten Zustand,
- Figur 11: Seitenansicht mit Teilschnitten der Messeinrichtung im montierten Zustand zwischen den Schienen,
- Figur 12: Draufsicht mit Teilschnitten auf einen Lastaufnahmeblock einer Messeinrichtung,
- Figur 13: vereinfachter Schnitt A - A nach Fig. 10 mit aufgesetztem Spurkranz,
- Figur 14: Draufsicht auf eine kombinierte Messvorrichtung für drei Achsen im montierten Zustand zwischen den Schienen,

### Beispiel 1

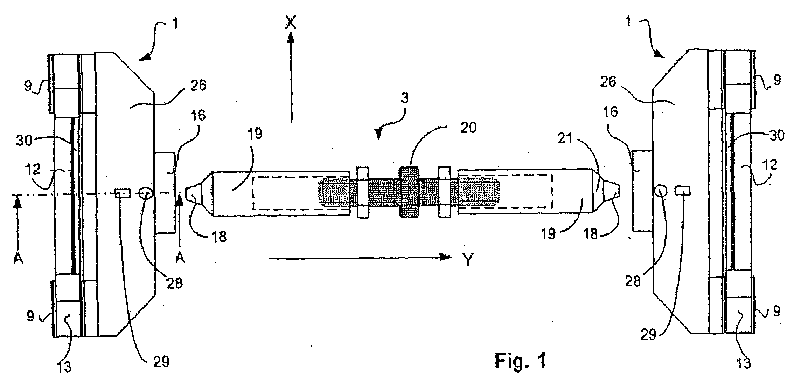

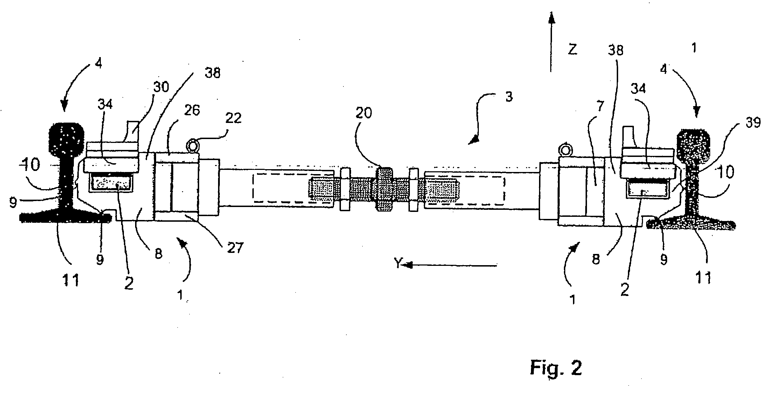

In Figur 1 ist eine Messeinrichtung in Draufsicht im demontierten Zustand dargestellt. Sie besteht aus einem linken und einem rechten Messblock **1** mit innenliegender Wägebrücke **2** (Figur 2) und einer einarmigen Verspannvorrichtung **3**. Zur Vorbereitung des Messvorganges werden die beiden Messblöcke **1** außerhalb des Gleisbettes mit der Verspannvorrichtung **3** vormontiert, danach zwischen die Schienen **4** verbracht und durch weiteres Spannen der Verspannvorrichtung **3** zwischen den Schienen **4** fest arretiert (Figur 2).

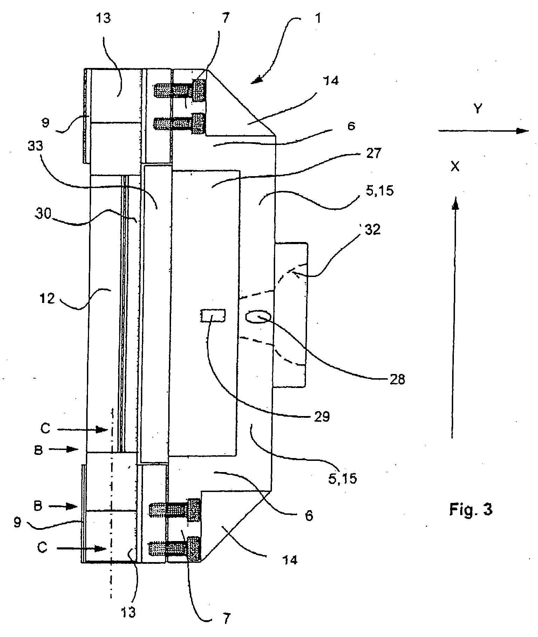

Der Messblock **1** besteht aus einer etwa u-förmigen Brücke **5** (Fig. 3), die in x-Richtung seitlich parallel zur Wägebrücke **2** angeordnet ist und zwei Auflagefüße **8** des Messblockes **1** verbindet. Die Brücke **5** besteht aus einem parallel zu den Schienen **4** verlaufenden Schenkel **15**, an dessen Enden sich anschließend und in y-Richtung etwa rechtwinklig abgebogen jeweils ein äußerer Schenkel **6** angeordnet ist, an welchem sich wiederum etwa rechtwinklig abgebogen, jeweils ein Flansch 7 sich anschließt, der die Verbindung zu je einem Auflagefuß **8** herstellt

Wie aus der Fig. 2 ersichtlich, weist der Auflagefuß **8** eine etwa klauenförmige Gestalt mit einer inneren Wange **38** und einer äußeren Wange **39** auf, wobei in dem Freiraum zwischen den Wangen **38; 39** die Wägebrücke **2** mit ihren Endstücken lagert. Oberhalb der in dem Freiraum der Klauen angeordneten Endstücke der Wägebrücke **2** sind kraftumleitende Verschlussstücke **34** zwischen den Wangen **38; 39** eingelegt.

An dem Auflagefuß **8** sind mindestens zwei punktförmige Auflageadapter **9** angeordnet, die eine Anpassung an die aktuelle Einbausituation am Schienensteg **10** und am Schienenfuß **11** gewährleisten. Eine solche Anpassung ist erforderlich, um herstellungsbedingte Unebenheiten an den Schienen **4** auszugleichen und um simulierte Extrembeanspruchungen zu messen. Alternativ können die Auflageadapter **9** mehrteilig oder streifenförmig angeordnet werden.

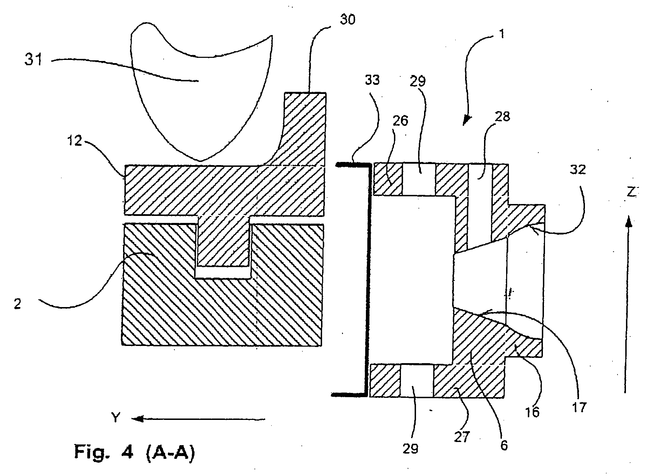

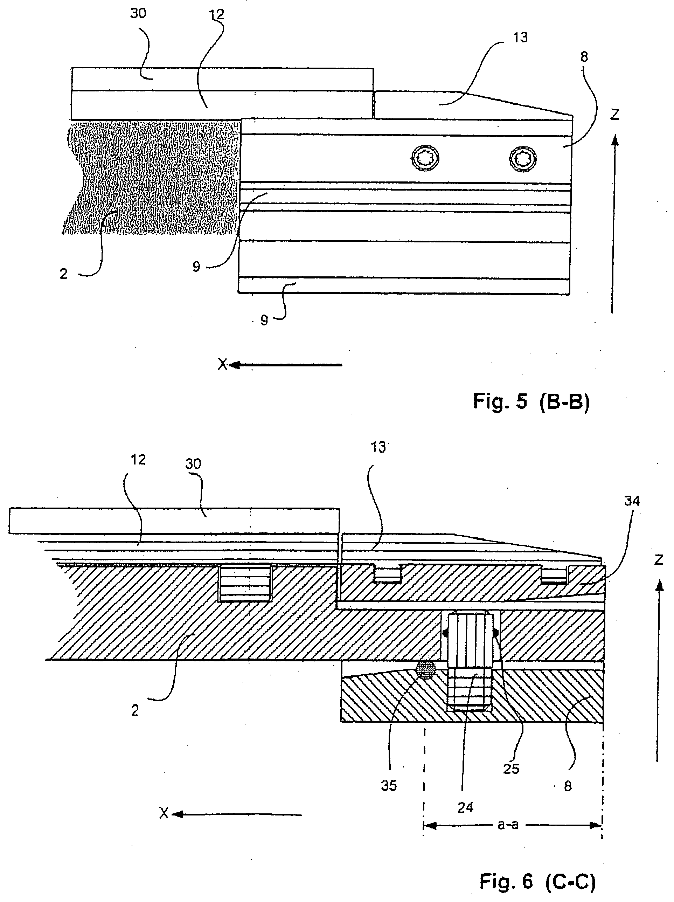

Der Messblock **1**, der wie ausgeführt zwei Auflagefüße **8** enthält, nimmt in x-Richtung, also horizontal längs zur Schiene **4**, zwischen den beiden Wangen **38; 39** der Auflagefüße **8**, die Endstücke der Wägebrücke **2** auf Die Wägebrücke **2** ist in diesem Ausführungsbeispiel ein stabförmiger bzw. balkenförmiger Lastenaufnehmer, der zwischen zwei Stützmitteln, hier zwei Auflagefüße **8** mit Auflageadaptern **9**, eingehangen ist. Wie aus den Figuren 4 und 6 ersichtlich, ist die Wägebrücke **2** in schwimmender Ausführung angeordnet, in dem sie nicht fest verschraubt, sondern um Führungszapfen **24** mit Nullringen **25** beweglich gelagert ist. Die schwimmende Lagerung des stabförmigen bzw. balkenförmigen Lastenaufnehmers erfolgt über dem Bereich a - a (Fig. 6) zwischen den beiden Wangen **38; 39** der Auflagefüße **8.** Die Führungszapfen **24** in den Auflagefüßen **8** gestatten der Wägebrücke **2** ein präzises Erreichen der Nulllage im nicht belasteten Zustand.

Bei den Wägebrücken **2** handelt es sich um wägetechnische Elemente, welche bei Verformung infolge einer äußeren Krafteinwirkung ihre Ausgangsspannung proportional zur eingebrachten Kraft verändern. Die Messung von statischen und/oder dynamischen Radlasten bzw. Radaufstandskräften von Schienenfahrzeugen erfolgt gemäß der Erfindung auf dem stabförmigen bzw. balkenförmigen Lastenaufnehmer also freihängend. Während des Wäge- bzw. Messvorganges verbiegt sich die stabförmige bzw. balkenförmige Wägebrücke **2** über ein unter ihren Endstücken angeordnetes Biegelager **35** in z-Richtung nach unten. Die Messgrößen oder der Verformungsweg aus einer Radaufstandsmessung werden über Dehnungsmessstreifen, Drucksensoren, Distanzsensoren, optische Sensoren oder andere Messmittel erfasst und ausgewertet. Die linke und rechte Radaufstandskraft werden addiert und ergeben die Achsaufstandskraft.

Oberhalb der Wägebrücke **2** ist eine Auffahrfläche **12** angeordnet. Längs auf der Auffahrfläche **12** befindet sich eine wulstförmige Aufbordung **30.** Diese dient der Stabilität der Auffahrfläche **12** und deren Kraftaufnahmevermögen sowie der exakten Führung des Spurkranzes **31** (Fig. 4). Unter die plattenförmige Auffahrfläche **12** oder auf diese werden für die unterschiedlichen Anwendungsbereiche der Messeinrichtung Distanzplatten (in den Fig. nicht dargestellt) gelegt, so dass ein auf die Auffahrfläche **12** mit dem Spurkranz **31** aufgefahrenes Rad eines Schienenfahrzeuges gegenüber der Fahrfläche der Schiene **4** größer beabstandet ist. Es kann somit dem Abnutzungsgrad der Lauffläche der Räder eines Schienenfahrzeuges und der damit einher gehenden Vergrößerung des Abstandes zwischen Lauffläche der Räder und Spurkranzkuppe entsprochen werden.

In x-Richtung sind der Auffahrfläche **12** je eine Rampenplatte **13** vor- bzw. nachgelagert. Diese sind auf dem Verschlussstück **34** des Auflagefußes **8** auswechselbar aufgesteckt. In x-Richtung verläuft eine Rampenplatte **13** schräg aufwärts zur Höhe der Auffahrfläche **12** und eine Rampenplatte **13** schräg von der Höhe der Auffahrfläche **12** abwärts. Die Rampenplatten **13** sind in Auf- und Abfahrtrichtung angefast. Auch auf oder unter die Rampenplatten **13** können je nach Bedarf Distanzplatten (in den Fig. nicht dargestellt) aufgelegt werden, um einen entsprechenden Höhenausgleich für das Auflegen von zusätzlichen Distanzplatten im Bereich der Auffahrfläche **12** zu erhalten.

Es liegt im Bereich der Erfindung, die Auffahrflächen **12** so zu gestalten, dass sie in der jeweiligen Auf- und Abfahrtrichtung angefast sind und somit die Rampenplatten **13** entfallen können. Zur Arretierung der Auffahrflächen **12** und der Rampenplatten **13** an ihren jeweiligen Unterlagen werden diese vorzugsweise an ihren Unterseiten mit entsprechend starken Zylinderstiften versehen, die wiederum zum Halten in zylindrischen Öffnungen der balkenförmigen Wägebrücke **2** bzw. in dem Verschlussstück **34** der Auflagefüße **8** eingreifen.

Zwischen der Brücke 5 und der unter der Auffahrfläche **12** angeordneten Wägebrücke **2** ist ein Kabelschutz **33** zur Aufnahme der Verbindungskabel der Wägebrücke **2** angeordnet. Die u-förmige Brücke **5** ist, wie aus der Fig. 1 ersichtlich, jeweils mit einer oberen Versteifungsplatte **26** und einer unteren Versteifungsplatte **27** (Fig. 2 und 3) abgedeckt, so dass die u-förmige Brücke **5** wie ein kompakter geschlossener Körper wirkt. Die Versteifungsplatten **26; 27** dienen dem Versteifen der Gesamtkonstruktion und verhindern Torsionen. Außerdem sind im Bereich der äußeren Schenkel **6** der u-förmigen Brücke **5** des Messblockes **1**, wie in der Fig. 3 zu sehen, Versteifungen **14** zur Verhinderung von Torsionen angeordnet. In der oberen und unteren Versteifungsplatte **26; 27** sind rechteckige Öffnungen **29** eingelassen, in welche bei der Demontage erforderlichenfalls Keile - in den Figuren nicht dargestellt - eingeschlagen werden, um die einarmige Verspannvorrichtung **3** am konischen Führungsstück **18** zu lösen.

Auf dem in x-Richtung verlaufenden Schenkel **15** der Brücke 5 ist mittig ein Aufnahmeelement **16** angeordnet, welches mit dem jeweiligen Kupplungsteil der einarmigen Verspannvorrichtung **3** im montierten Zustand korrespondiert. In diesem Aufnahmeelement **16** ist in y-Richtung zur Brücke **5** hin eine Aussparung von der Form einer Kugelzone als Einstecköffnung **32** vorgesehen, die wiederum nach innen in eine konische Vertiefung **17** übergeht, wobei diese mittig den Schenkel **15** der Brücke **5** durchbricht. In das Aufnahmeelement **16** mit der Einstecköffnung **32** und der sich anschließenden konischen Vertiefung **17** wird ein Kupplungsteil der Verspannvorrichtung **3** eingeführt.

Die konische Vertiefung **17** dient im Wesentlichen der sicheren Einführung des Kupplungsteiles der Verspannvorrichtung **3**, während die Einstecköffnung **32** von der Form einer Kugelzone als abstützende und kraftübertragende Vorrichtung vorgesehen ist und durch ihre bombierte Ausführung in der Lage ist, etwaige Toleranzen bei der optimalen Anpassung an die aktuelle Einbausituation auszugleichen. Dementsprechend ist das konische Führungsstück **18** der Verspannvorrichtung **3** nicht passgerecht zur konischen Vertiefung **17** gefertigt.

Wie in den Fig. 1, 2 und 7 dargestellt ist, bilden zwei Verspannhülsen **19**, die im Inneren ein gegenläufiges Gewinde aufweisen, in welches jeweils eine Schraubverspannung **20**, versehen mit Kontermuttern, eingeschraubt ist, eine einarmige Verspannvorrichtung **3.** Der Begriff einarmige Verspannvorrichtung **3** wurde hier zur Abgrenzung gegenüber dem Stand der Technik gewählt, weil - wie bereits ausgeführt - bekannte Messeinrichtungen mit zwei Elementen zum Verspannen (zweiarmig), zum Verklemmen und Verkanten der Messzellen führen.

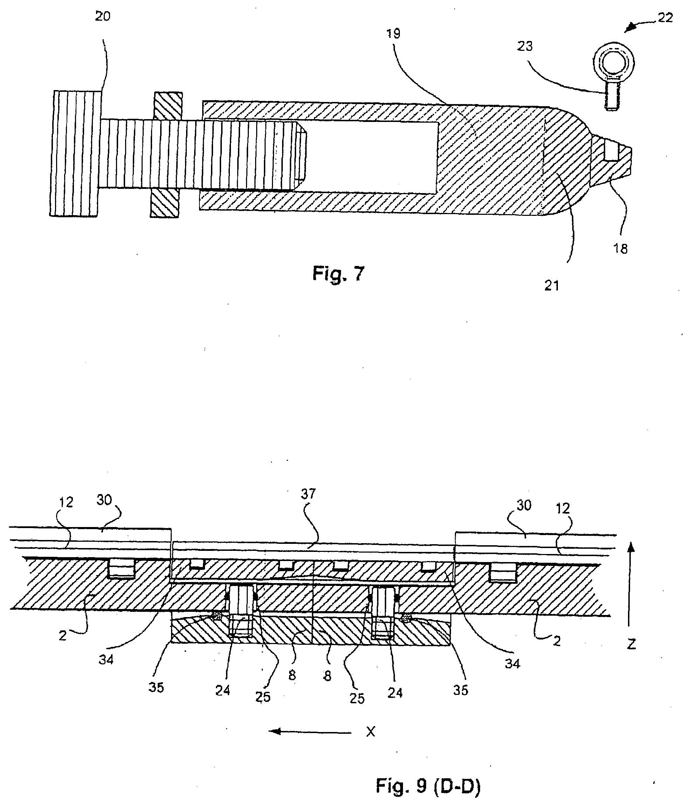

An den beiden den Schienen **4** zugewandten Enden gehen die beiden Verspannhülsen **19** in bombierte Verjüngungen in Form einer Kugelzone **21** über. Auf der Kugelzone **21** ist jeweils ein bereits erwähntes konisches Führungsstück **18** aufgesetzt, wobei das konischen Führungsstück **18** mit einer Gewindebohrung (Fig. 7) versehen ist. Während der Montage der Messeinrichtung, also der Verbindung der beiden Messblöcke **1** mit der einarmigen Verspannvorrichtung **3**, wird eine Verriegelung **22** mit einem Gewindezapfen **23** in das konische Führungsstück **18** eingeschraubt. Dies ist notwendig, um die Verspannvorrichtung **3** während der Montage an den Messblöcken **1** zu arretieren. Für diese Montagehilfe ist in z-Richtung durch die obere Versteifungsplatte **26** und die u-förmige Brücke 5 eine Bohrung vorgesehen, durch welche die Verriegelung **22** hindurchgeführt und mit dem konischen Führungsstück **18** der Verspannvorrichtung **3** verschraubt wird. Diese Arretierung erfolgt lediglich zur Halterung der Verspannvorrichtung **3** während der Montage bzw. Demontage. Demzufolge ist die Bohrung in der Brücke 5 und der oberen Versteifungsplatte **26** entsprechend groß dimensioniert, vorzugsweise als Langloch **28** ausgebildet, damit es während der Montage beim Verspannen der beiden Messblöcke **1** nicht zu einem Abscheren des Gewindezapfens **23** kommt.

Die von der Verspannvorrichtung **3** ausgehende Kraft wird über das mittig am Schenkel **15** angeordnete Aufnahmeelement **16** und die Einstecköffnung **32** auf den Schenkel **15**, die beiden äußeren Schenkel **6** und die beiden Flansche **7** und somit auf die Auflagefüße **8** und die Auflageadapter **9** an die jeweilige Schiene **4** übertragen. Erwähnt wurde bereits die klauenförmige Gestalt des Auflagefußes **8**, in dessen Freiraum zwischen der inneren Wange **38** und der äußeren Wange **39** ein Endstück der Wägebrücke **2** lagert und oberhalb des Endstückes ein kraftumleitendes Verschlussstück **34** eingelegt ist. Dieses Verschlussstück **34** leitet gleichermaßen Kraft weiter, wie die unter dem Endstück der Wägebrücke **2** konstruktive Ausgestaltung des Auflagefußes **8**, so dass eine gleichmäßige Kraftübertragung oberhalb und unterhalb um das Endstück der Wägebrücke **2** erfolgt. Es ist damit ein Verklemmen oder eine sonstige negative Beeinflussung des stabförmigen bzw. balkenförmigen Lastenaufnehmers als Wäge- bzw. Messzelle vollständig ausgeschlossen. Die obere und untere Versteifungsplatte **26**; **27** zur Abdeckung der u-förmigen Brücke **5** übernehmen eine zusätzliche gleichmäßige Übertragung der Verspannkräfte.

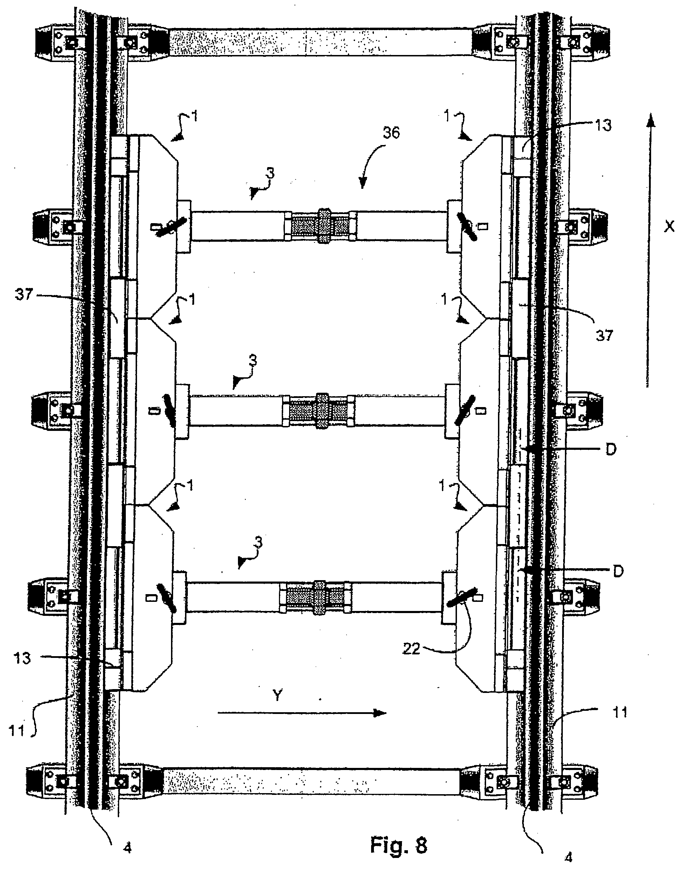

Um den Mess- bzw. Wägeprozess von Schienenfahrzeugen mit mehreren hintereinander liegenden Achsen zu beschleunigen, wird gemäß der Erfindung eine kombinierte Mehrfachmesseinrichtung **36** vorgeschlagen. An Hand einer Mehrfachmesseinrichtung **36** wird die Messung von Radaufstandkräften für ein dreiachsiges Drehgestell erläutert. In Fig. 8 ist eine Draufsicht auf eine Mehrfachmesseinrichtung **36** im montierten Zustand im Gleisbett dargestellt. Die Mehrfachmesseinrichtung **36** besteht aus drei Messeinrichtungen, wie sie oben näher beschrieben sind. Die Auswertung der Messergebnisse erfolgt durch Addition der Radlasten einer Achse und wiederum Addition von drei Achsen zum Gewicht des Drehgestells.

Um ein Überfahren über die drei einzelnen Messeinrichtungen zu gewährleisten, sind zwischen den einzelnen Messeinrichtungen Verbindungsbrücken **37** aufgelegt. Diese Verbindungsbrücken **37** liegen wiederum auf jeweils zwei Verschlussstücken **34** auf, wobei die Verschlussstücke **34**, wie oben beschrieben, auf den Endstücken einer Wägebrücke **2** aufliegen.

In der Fig. 9 ist ein Schnitt D - D nach Fig. 8 dargestellt. Die Fig. 9 zeigt, wie die Auflagefüße **8** und somit die Wägebrücken **2** von zwei benachbarten Messeinrichtungen unmittelbar aneinander stoßen. Es liegt im Bereich der Erfindung, zwischen zwei benachbarten Messeinrichtungen einen Abstand zu lassen, um unterschiedlichen Achsabständen verschiedenster Drehgestelle zu entsprechen. Aus der Beabstandung von zwei benachbarten Messeinrichtungen ergibt sich eine Verlängerung der zwischenliegenden Verbindungsbrücke **37**.

Die Montage und Demontage der kompletten Mehrfachmesseinrichtung **36** erfolgt für jede Messeinrichtung einzeln, wobei lediglich an Stelle von Rampenplatten **13** zwischen benachbarte Mehrfachmesseinrichtungen **36** die erwähnten Verbindungsbrücken **37** eingelegt werden. Es versteht sich dabei von selbst, dass an der ersten bzw. letzten Messeinrichtung zum Aufbzw. Abfahren Rampenplatten **13** auf den jeweiligen Verschlussstücken **34** angeordnet sind.

### Beispiel 2

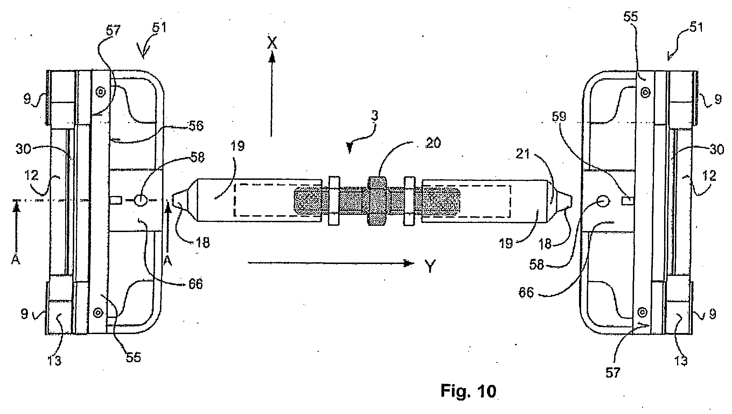

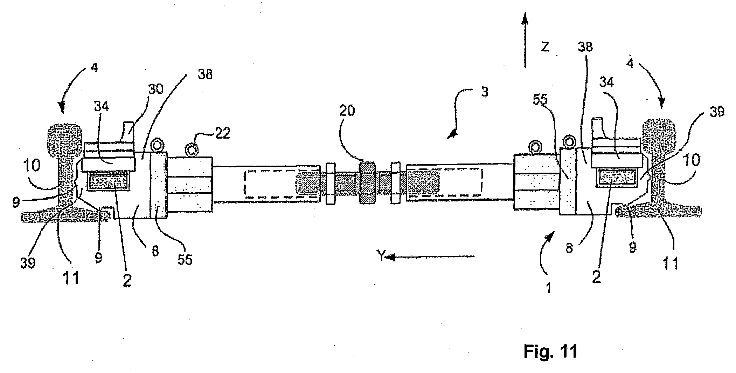

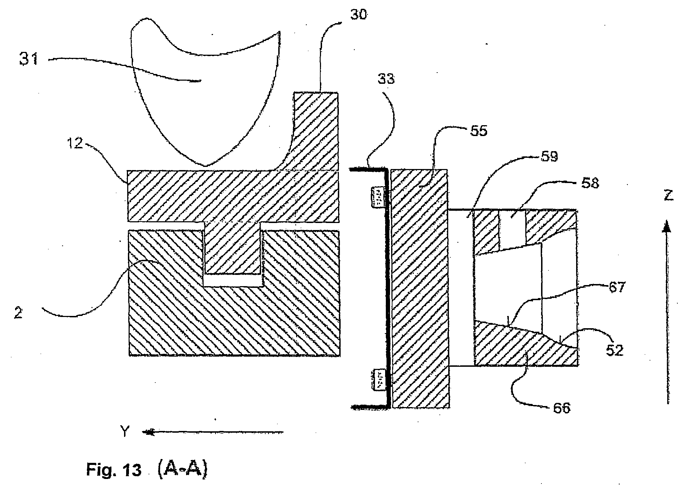

In Abwandlung von der in Beispiel 1 vorgestellten Messeinrichtung wird in diesem Beispiel eine Messeinrichtung mit Versteifungsplatten **76** beschrieben, die mit einer Kante mit einer Brücke **55,** mit einer zweiten Kante an einem Aufnahmeelement **66** und mit einer dritten Kante mit einem Haltegriff **65** fest verbunden sind. Anhand der Figuren 10 bis 14 werden im Wesentlichen die konstruktiven Änderungen gegenüber der Messeinrichtung nach Beispiel 1 beschrieben. Nicht erwähnte Konstruktionselemente entsprechen im Wesentlichen der Messeinrichtung nach Beispiel 1.

Die Messeinrichtung besteht auch aus zwei Lastaufnahmeblöcken mit einem innenliegenden Messabschnitt und Elementen zum Halten und Verspannen. Die Lastaufnahmeblöcke sind als linker und rechter Messblock **51** ausgebildet und nehmen jeweils einen innenliegenden Messabschnitt auf. Der Messblock **51** besteht aus einer Brücke **55**, die in x-Richtung seitlich parallel zur Wägebrücke **2** angeordnet ist und die klauenförmigen Auflagefüße **8** des Messblockes **51** verbindet. Die Brücke **55** hat die Form einer Platte, die an ihren Enden im Bereich 57 an je einem Auflagefuß **8** mittels Verschraubung angeflanscht ist.

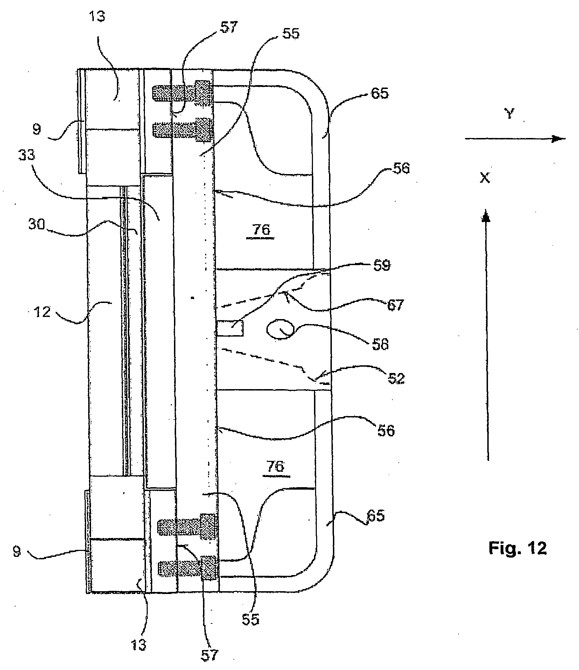

Die plattenförmige Brücke **55** ist, wie oben erwähnt, im Bereich **57** (Fig. 12) an je einem Auflagefuß **8** mittels Verschraubung angeflanscht. Auf der gegenüberliegenden Außenseite **56** der plattenförmigen Brücke **55** ist mittig ein noch näher zu beschreibendes Aufnahmeelement **66** angeordnet, vorzugsweise angeschweißt. Links- und rechtsseitig mit diesem Aufnahmeelement **66** verschweißt, verlaufen horizontal Versteifungsplatten **76** etwa bis zu den Außenkanten der plattenförmigen Brücke **55**. Die Versteifungsplatten **76** sind mit einer Kante mit der Brücke **55**, mit einer zweiten Kante an dem Aufnahmeelement **66** und mit einer dritten Kante mit je einem Haltegriff **65** fest verbunden, vorzugsweise verschweißt. Die Versteifungsplatten **76** geben in Verbindung mit den Haltegriffen **65** der Gesamtkonstruktion die erforderliche Kompaktheit, dienen dem Versteifen der Einzelelemente und verhindern somit Torsionen.

Das auf der Außenseite **56** der Brücke **55** mittig angeordnete Aufnahmeelement **66** ist von etwa zylinderförmiger Gestalt und dient der Aufnahme von Elementen zum Halten und Verspannen, beispielsweise eines Kupplungsteils einer einarmigen Verspannvorrichtung **3**, deren zweites Kupplungsteil bei der Montage der Messeinrichtung wiederum in ein Aufnahmeelement **66** eines gegenüberliegenden Messblockes **51** einsteckbar ist. Damit die Kupplungsteile der einarmigen Verspannvorrichtung **3** mit dem Aufnahmeelement **66** im montierten Zustand korrespondieren, ist in y-Richtung das Aufnahmeelement **66** in Form einer Kugelzone als Einstecköffnung **52** aufgebohrt. Diese kugelzonenförmige Einstecköffnung **52** geht nach innen in eine konische Vertiefung **67** über. Die konische Vertiefung **67** dient im Wesentlichen der Einführung des Kupplungsteiles der Verspannvorrichtung **3**, während die Einstecköffnung **52** von der Form einer Kugelzone als abstützende und kraftübertragende Zone vorgesehen ist und durch ihre bombierte Ausführung in der Lage ist, etwaige Toleranzen bei der optimalen Anpassung an die aktuelle Einbausituation auszugleichen. Dementsprechend ist das konische Führungsstück **18** (Fig. 1) der Verspannvorrichtung **3** nicht passgerecht zur konischen Vertiefung **67** gefertigt.

In dem Aufnahmeelement **66** ist vertikal verlaufend eine rechteckige Öffnung **59** eingelassen, in welche bei der Demontage erforderlichenfalls ein Keil - in den Figuren nicht dargestellt - eingeschlagen werden kann, um die einarmige Verspannvorrichtung **3** am konischen Führungsstück **18** zu lösen.

Die Montage und Demontage der Verspannhülsen **19** erfolgt wie im Beispiel 1 dargelegt. Während der Montage der Messeinrichtung, also der Verbindung der beiden Messblöcke **51** mit der einarmigen Verspannvorrichtung **3**, wird die Verriegelung **22** mit einem Gewindezapfen durch ein Langloch **58** in dem Aufnahmeelement 66 in das konische Führungsstück **18** der Verspannvorrichtung **3** eingeschraubt. Diese Arretierung erfolgt auch hier lediglich zur Halterung der Verspannvorrichtung **3** während der Montage bzw. Demontage.

Die von der Verspannvorrichtung **3** ausgehende Kraft wird über das mittig an der Brücke **55** angeordnete Aufnahmeelement **66**, die Einstecköffnung **52** und auf die horizontal verlaufenden Versteifungsplatten **76**, über den angeflanschten Bereich **57** und somit auf die Auflagefüße **8** und die Auflageadapter **9** an die jeweilige Schiene **4** übertragen.

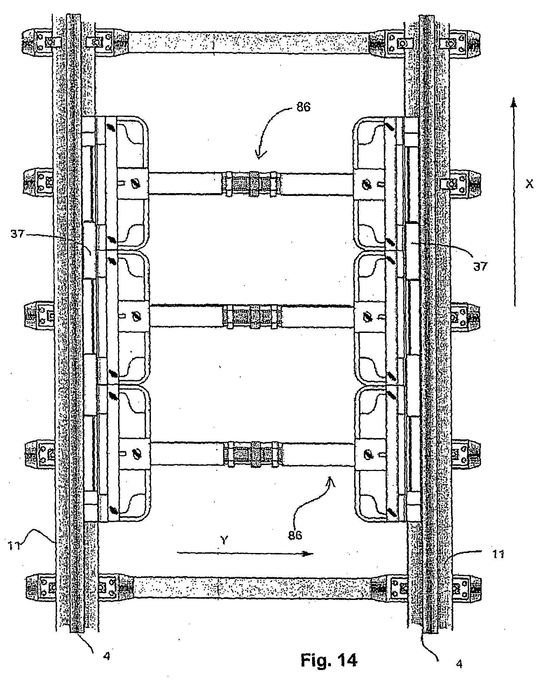

Um den Mess- bzw. Wägeprozess von Schienenfahrzeugen mit mehreren hintereinander liegenden Achsen zu rationalisieren, wird gemäß dieser Ausführungsform eine kombinierte Mehrfachmesseinrichtung **86** vorgeschlagen. Anhand der Darstellung einer Mehrfachmesseinrichtung **86** (Fig. 14) wird die Messung von Radaufstandkräften für ein dreiachsiges Drehgestell erläutert. In Fig. 14 ist eine Draufsicht auf eine Mehrfachmesseinrichtung **86** im montierten Zustand im Gleisbett dargestellt.

## Patentansprüche

1. Messeinrichtung zum Erfassen von Radlasten, insbesondere von Schienenfahrzeugen,
- mit mindestens zwei Lastaufnahmeblöcken (1), mit in diesen angeordneten Messabschnitten,
- mit Elementen zum Halten und Verspannen der Lastaufnahmeblöcke (1) in einer Spur oder Gleisanlage,
- mit in einem Lastaufnahmeblock angeordneten Stützmitteln für einen Messabschnitt und
- mit streifen- und/oder punktförmige Auflagen zur Arretierung in der Spur oder Gleisanlage,
- wobei der Messabschnitt eine Wägebrücke (2) bildend, frei hängend und nur mit seinen Endstücken auf den Stützmitteln gelagert ist, **dadurch gekennzeichnet, dass**
- mindestens zwei kraftumleitende Elemente, die die auf einen Lastaufnahmeblock von einer einarmigen Verspannvorrichtung **(3)** wirkenden Kräfte in ihrer Wirkungslinie zerlegen in einem Lastaufnahmeblock angeordnet sind und
- dass die mindestens zwei Lastaufnahmeblöcke mittels der einarmigen Verspannvorrichtung **(3)** in einer Spur oder Gleisanlage arretiert sind.

2. Messeinrichtung nach Anspruch 1, wobei die Lastaufnahmeblöcke jeweils als separate Messblöcke **(1)** ausgebildet sind und in einem Messblock **(1)** als ein erstes kraftumleitendes Element eine u-förmige Brücke **(5)** angeordnet ist, die in x-Richtung seitlich parallel zu einem Messabschnitt, vorzugsweise einer balken- bzw. stabförmigen Wägebrücke **(2),** angeordnet ist.

3. Messeinrichtung nach den Ansprüchen 1 und 2, wobei die u-förmige Brücke **(5)** aus einem in x-Richtung verlaufenden Schenkel **(15),** aus zwei abgewinkelten äußeren Schenkeln **(6)** mit je einem abgewinkelten Flansch **(7)** besteht, wobei die Flansche **(7)** mit den Stützmitteln kraftübertragend verbunden sind.

4. Messeinrichtung nach den Ansprüchen 1 und 2, wobei als ein zweites kraftumleitendes Element innerhalb des Messblockes **(1)** einer u-förmige Brücke **(5)** mit mindestens einer Versteifungsplatte **(26; 27),** vorzugsweise oberhalb mit einer oberen Versteifungsplatte **(26)** und unterhalb mit einer unteren Versteifungsplatte **(27)** versehen ist.

5. Messeinrichtung nach Anspruch 1, wobei die Lastaufnahmeblöcke jeweils als separate Messblöcke **(51)** mit innenliegendem Messabschnitt ausgebildet sind und in einem Messblock **(51)** als ein drittes kraftumleitendes Element eine plattenförmige Brücke **(55)** angeordnet ist, die in x-Richtung seitlich parallel zu der balken- bzw. stabförmigen Wägebrücke **(2)** verläuft und so angeordnet ist, dass die plattenförmige Brücke **(55)** Stützmittel verbindet.

6. Messeinrichtung nach einem oder mehreren der vorangegangenen Ansprüche, wobei die Stützmittel im Messblock **(1; 51)** als Auflagefüße **(8)** ausgebildet und von klauenförmiger Gestalt sind und eine innere Wange **(38),** und eine äußere Wange **(39)** mit einem zwischen diesen Wangen **(38; 39)** liegenden Freiraum aufweisen, wobei jeweils ein Endstück der Wägebrücke **(2)** in schwimmender Ausführung in diesem Freiraum gelagert ist.

7. Messeinrichtung nach einem oder mehreren der vorangegangenen Ansprüche, wobei in dem klauenförmigen Auflagefuß **(8)** über dem im Freiraum zwischen den Wangen **(38; 39)** angeordnetem Endstück der Wägebrücke **(2)** ein Verschlussstück **(34)** so angeordnet ist, dass der klauenförmige Auflagefuß **(8)** in Verbindung mit dem Verschlussstück **(34)** als ein viertes kraftumleitendes Element innerhalb des Messblockes **(1; 51)** wirkt.

8. Messeinrichtung nach einem oder mehreren der vorangegangenen Ansprüche, wobei in dem Messblock **(51)** als ein fünftes kraftumleitendes Element mindestens eine Versteifungsplatte **(76)** angeordnet und die Versteifungsplatte **(76)** mit der Brücke **(55),** einem Aufnahmeelement **(66)** und vorzugsweise mit einem Haltegriff **(65)** fest verbunden ist.

9. Messeinrichtung nach einem oder mehreren der vorangegangenen Ansprüche, wobei auf der in den Auflagefüßen **(8)** lagernden Wägebrücke **(2)** eine Auffahrfläche **(12)** aufliegt, die eine in Längsrichtung der Auffahrfläche **(12)** auf der der Schiene **(4)** abgewandten Seite eine Aufbordung **(30)** aufweist.

10. Messeinrichtung nach einem oder mehreren der vorangegangenen Ansprüche, wobei die Endstücke der Wägebrücke **(2)** um Führungszapfen **(24)** mit Nullringen **(25)** bewegbar angeordnet sind und im Bereich a - a in den Auflagefüßen **(8)** schwimmend lagern.

11. Messeinrichtung nach einem oder mehreren der vorangegangenen Ansprüche, wobei auf der u-förmigen bzw. plattenförmigen Brücke **(5; 55)** mittig ein Aufnahmeelement **(16; 66)** mit einer kugelzonenförmigen Einstecköffnung **(32; 52)** angeordnet ist und sich an diese eine konische Vertiefung **(17)** in der u-förmigen Brücke **(5)** anschließt bzw. eine solche konische Vertiefung **(67)** in der plattenförmigen Brücke **(55)** angeordnet ist.

12. Messeinrichtung nach Anspruch 1, wobei die einarmige Verspannvorrichtung **(3)** aus mindestens einer Verspannhülse **(19)** und einer Schraubverspannung **(20)** besteht und das Ende der Verspannhülse **(19)** in Form einer Kugelzone **(21)** verjüngt ist und in ein konisches Führungsstück **(18)** übergeht

13. Messeinrichtung nach einem oder mehreren der vorangegangenen Ansprüche, wobei mindestens zwei hintereinander in einer Spur oder in einem Gleisbett angeordnete Messeinrichtungen durch Verbindungsbrücken **(37)** zu einer Mehrfachmesseinrichtung **(36; 86)** verbunden sind.

14. Messeinrichtung nach einem oder mehreren der vorangegangenen Ansprüche, wobei jeweils Messblöcke **(1; 51)** quer zur Fahrtrichtung paarweise ohne Verspannelemente in einer Spur oder in einer Gleisanlage mittels zusätzlicher Arretiervorrichtung angeordnet sind.

15. Messeinrichtung nach einem oder mehreren der vorangegangenen Ansprüche, wobei zur Anordnung der Messeinrichtung außerhalb einer Gleisanlage anstelle der lasttragenden Auffahrflächen **(12)** Auffahrflächen mit einer den allgemeinen Fahrzeugrädern angepassten Geometrie angeordnet sind.

## Claims

1. A measuring device for detecting wheel loads, particularly of rail vehicles,
- with at least two load receiving blocks (1) having measuring portions arranged therein;
- with elements for holding and clamping the load receiving blocks (1) in a track or track system;
- with supporting means for a measuring portion, said supporting means being arranged in a load receiving block; and
- with stripe-shaped and/or punctiform rests for locking in the track or track system,
- wherein the measuring portion is supported, while forming a weighing bridge and being freely suspended, on the supporting means at its end parts only, **characterized in that**
at least two force diverting elements are arranged in a load receiving block, said force diverting elements resolving the forces acting on a load receiving block in its line of application, said forces being applied by a single-armed clamping device (3); and
the at least two load receiving blocks by means of the single-armed clamping device (3) are locked in a track or track system.

2. The measuring device according to Claim 1, wherein each load receiving block is designed as a separate measuring block (1) and a U-shaped bridge (5), as a first force diverting element, is arranged in a measuring block (1), said U-shaped bridge (5) being arranged, in the x-direction, laterally parallel to a measuring portion, preferably a beamshaped or rod-shaped weighing bridge (2).

3. The measuring device according to Claims 1 and 2, wherein the U-shaped bridge (5) consists of a leg (15) extending in the x-direction and two angled outer legs (6), each outer leg (6) having one angled flange (7), wherein the flanges (7) are connected to the supporting means such that they transmit forces.

4. The measuring device according to Claims 1 and 2, wherein, as a second force diverting element within the measuring block (1), the U-shaped bridge (5) is provided with at least one stiffening plate (26; 27), preferably with an upper stiffening plate (26) arranged above and a lower stiffening plate (27) arranged below.

5. The measuring device according to Claim 1, wherein each load receiving block is designed as a separate measuring block (51) with an interior measuring portion, and a plate-shaped bridge (55), as a third force diverting element, is arranged in a measuring block (51), said plate-shaped bridge (55) extending, in the x-direction, laterally parallel to the beamshaped or rod-shaped weighing bridge (2) and being arranged such that the plate-shaped bridge (55) connects supporting means.

6. The measuring device according to one or more of the preceding claims, wherein the supporting means in the measuring block (1; 51) are designed as bearing feet (8) and are claw-shaped and have an inner cheek (38) and an outer cheek (39) with a clearance between these cheeks (38; 39), wherein one end part of the weighing bridge (2) at a time is floatingly supported in this clearance.

7. The measuring device according to one or more of the preceding claims, wherein in the claw-shaped bearing foot (8), a sealing piece (34) is arranged above the end part of the weighing bridge (2) arranged in the clearance between the cheeks (38; 39), wherein the sealing piece (34) is arranged such that the claw-shaped bearing foot (8), together with the sealing piece (34), acts as a fourth force diverting element within the measuring block (1; 51).

8. The measuring device according to one or more of the preceding claims, wherein at least one stiffening plate (76) is arranged as a fifth force diverting element in the measuring block (51) and the stiffening plate (76) is firmly connected to the bridge (55), to a receiving element (66) and preferably to a handle (65).

9. The measuring device according to one or more of the preceding claims, wherein a drive-on surface (12) rests on the weighing bridge (2) being supported in the bearing feet (8), said drive-on surface (12) having a raised edge (30) in the longitudinal direction of the drive-on surface (12) on that side which faces away from the rail (4).

10. The measuring device according to one or more of the preceding claims, wherein the end parts of the weighing bridge (2) are arranged such that they are movable about guiding pins (24) with O-rings (25) and said end parts are floatingly supported in the bearing feet (8) in the region a - a.

11. The measuring device according to one or more of the preceding claims, wherein a receiving element (16; 66) with a zone-of-a-sphere-shaped push-in opening (32; 52) is centrically arranged on the U-shaped/plate-shaped bridge (5; 55) and a conical recess (17) in the U-shaped bridge (5) adjoins said push-in opening (32; 52) or such a conical recess (67) is arranged in the plate-shaped bridge (55).

12. The measuring device according to Claim 1, wherein the single-armed clamping device (3) consists of at least one clamping sleeve (19) and a screw-type clamping unit (20) and the end of the clamping sleeve (19) tapers in the form of a zone of a sphere (21) and turns into a conical guiding piece (18).

13. The measuring device according to one or more of the preceding claims, wherein at least two measuring devices arranged one behind the other in a track or in a trackbed are connected to each other by connecting bridges (37) such that a multiple measuring device (36; 86) is formed.

14. The measuring device according to one or more of the preceding claims, wherein in a track or in a track system, measuring blocks (1; 51) at a time are arranged, by means of an additional locking device, at right angles to the direction of motion and in pairs and without clamping elements.

15. The measuring device according to one or more of the preceding claims, wherein for arranging the measuring device outside a track system, drive-on surfaces with a geometry that is adapted to the general vehicle wheels are arranged instead of the load bearing drive-on surfaces (12).

## Revendications

1. Dispositif de mesure pour la détection de charges de roues, notamment de véhicules ferroviaires,
- avec au moins deux blocs de prise de charge (1), avec des sections de mesure disposées dans ceux-ci,
- avec des éléments pour maintenir et serrer les blocs de prise de charge (1) sur une voie ou sur des rails,
- avec des moyens d'appui disposés dans un bloc de prise de charge pour une section de mesure et
- avec des supports en forme de bandes et/ou de points pour le blocage sur la voie ou sur les rails,
- la section de mesure étant montée de façon à être librement suspendue et uniquement avec ses pièces d'extrémité sur les moyens d'appui, formant un pont de pesage (2), **caractérisé en ce que**
au moins deux éléments redistribuant les forces, lesquels divisent dans leur ligne d'action les forces s'exerçant sur un bloc de prise de charge à partir d'un dispositif de serrage à bras unique (3), étant disposés dans un bloc de prise de charge et
**en ce que** les au moins deux blocs de prise de charge étant bloqués sur une voie ou sur des rails au moyen d'un dispositif de serrage (3) à bras unique.

2. Dispositif de mesure selon la revendication 1, les blocs de prise de charge étant respectivement formés comme des blocs de mesure (1) distincts et, comme un premier élément de redistribution de force, un pont en forme de U (5) étant disposé dans un bloc de mesure (1), lequel pont est disposé dans l'axe des x latéralement en parallèle à une section de mesure, de préférence à un pont de pesage (2) en forme de poutre ou de barre.

3. Dispositif de mesure selon les revendications 1 et 2, le pont en forme de U (5) se composant d'une branche (15) s'étendant dans l'axe des x, de deux branches extérieures (6) en angle avec chacune une bride (7) en angle, les brides (7) étant reliées avec les moyens d'appui de façon à transmettre les forces.

4. Dispositif de mesure selon les revendications 1 et 2, le pont en forme de U (5) étant muni, comme un deuxième élément de redistribution de force au sein du bloc de mesure (1), d'au moins une plaque de renforcement (26 ; 27), de préférence avec une plaque de renforcement supérieure (26) au-dessus et avec une plaque de renforcement inférieure (27) au-dessous.

5. Dispositif de mesure selon la revendication 1, les blocs de prise de charge étant respectivement formés comme des blocs de mesure distincts (51) avec section de mesure située à l'intérieur et, comme un troisième élément de redistribution de force, un pont en forme de plaque (55) étant disposé dans un bloc de mesure (51), lequel pont s'étend dans l'axe des x latéralement en parallèle au pont de pesage (2) en forme de poutre ou de barre, et étant disposé de telle sorte que le pont en forme de plaque (55) relie les moyens d'appui.

6. Dispositif de mesure selon l'une ou plusieurs des revendications précédentes, les moyens d'appui étant formés comme des pieds supports (8) dans le bloc de mesure (1 ; 51) et étant en forme de griffes et présentant une joue intérieure (38) et une joue extérieure (39) avec un espace vide situé entre ces deux joues (38 ; 39), une pièce d'extrémité du pont de pesage (2) étant respectivement montée de façon flottante dans cet espace vide.

7. Dispositif de mesure selon l'une ou plusieurs des revendications précédentes, une pièce de fermeture (34) étant disposée dans le pied support (8) en forme de griffe au-dessus de la pièce d'extrémité du pont de pesage (2) disposée dans l'espace vide entre les joues (38 ; 39) de telle sorte que le pied support (8) en forme de griffe agit comme un quatrième élément redistribuant les forces au sein du bloc de mesure (1 ; 51) conjointement avec la pièce de fermeture (34).

8. Dispositif de mesure selon l'une ou plusieurs des revendications précédentes, au moins une plaque de renforcement (76) étant disposée dans le bloc de mesure (51) comme un cinquième élément redistribuant les forces et la plaque de renforcement (76) étant fermement reliée avec le pont (55), avec un élément de réception (66) et de préférence avec une poignée (65).

9. Dispositif de mesure selon l'une ou plusieurs des revendications précédentes, une surface de chargement (12) reposant sur le pont de pesage (2) monté dans les pieds supports (8), laquelle présente un rebord (30) sur son côté éloigné du rail (4) dans le sens longitudinal de la surface de chargement (12).

10. Dispositif de mesure selon l'une ou plusieurs des revendications précédentes, les pièces d'extrémité du pont de pesage (2) étant disposées de façon mobile sur des goujons de guidage (24) avec joints toriques (25) et étant montées de façon flottante dans les pieds supports (8) dans la zone a-a.

11. Dispositif de mesure selon l'une ou plusieurs des revendications précédentes, un élément de réception (16 ; 66) avec une ouverture d'insertion (32 ; 52) en forme de zone sphérique étant disposé au milieu du pont en forme de U ou en forme de plaque (5 ; 55) et une cavité conique (17) étant adjacente à celle-ci dans le pont en forme de U ou une telle cavité conique (67) étant disposée dans le pont en forme de plaque (55).

12. Dispositif de mesure selon la revendication 1, le dispositif de serrage à bras unique (3) se composant d'au moins une douille de serrage (19) et d'un élément de serrage par vissage (20) et l'extrémité de la douille de serrage (19) étant rétrécie en forme d'une zone sphérique (21) et étant adjacente à un élément de guidage (18) conique.

13. Dispositif de mesure selon l'une ou plusieurs des revendications précédentes, au moins deux dispositifs de mesure disposés l'un derrière l'autre sur une voie ou sur un ballast étant reliés par des ponts de liaison (37) à un dispositif de mesure multiple (36 ; 86).

14. Dispositif de mesure selon l'une ou plusieurs des revendications précédentes, des blocs de mesure (1 ; 51) étant respectivement disposés par paires sans éléments de serrage sur une voie ou sur des rails au moyen d'un dispositif de blocage supplémentaire, transversalement par rapport au sens de marche.

15. Dispositif de mesure selon l'une ou plusieurs des revendications précédentes, des surfaces de chargement avec une géométrie adaptée aux roues de véhicules générales étant disposées pour le placement du dispositif de mesure hors de rails, au lieu des surfaces de chargement (12) portant la charge.
